# EUROPÄISCHE PATENTSCHRIFT

(11) **EP 1 038 138 B1**
(45) Veröffentlichungstag und Bekanntmachung des Hinweises auf die Patenterteilung: **11.02.2004**
(21) Anmeldenummer: 98943812.2
(22) Anmeldetag: 31.07.1998
(51) Int. Cl.: F16L 19/08, F16L 33/22, F16L 37/12

(54) **ANSCHLUSSVORRICHTUNG FÜR DRUCKMITTELLEITUNGEN**
COUPLING DEVICE FOR HYDRAULIC LINES
DISPOSITIF DE RACCORDEMENT POUR CONDUITES HYDRAULIQUES

(30) Priorität: 16.12.1997 DE 19755743
(43) Veröffentlichungstag der Anmeldung: 27.09.2000
(73) Patentinhaber: Festo AG & Co, 73734 Esslingen (DE)
(72) Erfinder: STOLL, Kurt, D-73732 Esslingen (DE); KEES, Ulrich, D-66386 St Ingbert (DE)
(74) Vertreter: Abel, Martin, Dipl.-Ing.
(86) Internationale Anmeldenummer: PCT/EP1998/004798
(87) Internationale Veröffentlichungsnummer: WO 1999/031425

(56) Entgegenhaltungen:
- EP-A- 0 339 155
- EP-A- 0 811 801
- DE-C- 862 531
- FR-A- 2 335 137
- FR-A- 2 361 591
- GB-A- 866 587
- GB-A- 2 112 483
- GB-A- 2 136 903

## Beschreibung

Die Erfindung betrifft eine Anschlussvorrichtung für Druckmittelleitungen
- mit einem einen Strömungskanal aufweisenden Grundkörper,
- mit einer zum Einstecken einer Druckmittelleitung vorgesehenen Einsteckseite,
- mit einer koaxial zu einem Endabschnitt des Strömungskanals an dem Grundkörper gehaltenen, durch Längsschlitze in über den Umfang verteilte und radial bewegbare Spannarme unterteilten hülsenähnlichen Spannzange, die mit nach innen ragenden Greifzähnen versehen ist und deren Außenumfang eine sich über wenigstens einen Teil ihrer Länge in Richtung zur Einsteckseite konisch verjüngende erste Beaufschlagungsfläche definiert,
- und mit einem die Spannzange über zumindest einen Teil ihrer Länge koaxial umschließenden, mit dem Grundkörper bezüglich diesem axial verlagerbar in Eingriff stehenden hülsenähnlichen Betätigungsköper, der am Innenumfang eine der ersten Beaufschlagungsfläche zugewandte, sich über wenigstens einen Teil ihrer Länge in Richtung zur Einsteckseite konisch verjüngende zweite Beaufschlagungsflächen definiert, wobei die beiden Beaufschlagungsflächen derart zusammenwirken können, dass die Greifzähne der Spannzange gegen den Außenumfang einer an der Einsteckseite der Anschlussvorrichtung eingesteckten Druckmittelleitung gedrückt werden.

Eine vergleichbare Anschlussvorrichtung geht aus der FR-A-1316971 hervor. Diese verfügt über eine aus mehreren segmentartigen Spannarmen zusammengesetzte hülsenähnliche Spannzange, die an einem Grundkörper fixiert ist. Ein anzuschließender Druckmittelschlauch wird von einer Einsteckseite her in Spannzange eingeführt und dadurch festgespannt, dass ein die Spannzange umgebender Beaufschlagungsköper verschraubt wird, so dass durch das Zusammenwirken konischer Beaufschlagungsflächen eine radial nach innen gerichtete Spannbewegung der Spannarme erzeugt wird. Um den Druckmittelschlauch in der Spannzange sicher zu fixieren, verfügt die Spannzange am Innenumfang über eine gewindeähnliche Struktur definierende Greifzähne, die sich in den Außenumfang des Druckmittelschlauches eingraben können.

Ähnliche Anschlussvorrichtungen zeigen auch die US-A-1497453 und die DE-A-2352885.

Dem vorgenannten Stand der Technik ist gemeinsam, dass die über die axiale Baulänge der Spannzange verteilt angeordneten Greifzähne nicht immer einen ausreichen sicheren Halt der eingesteckten Druckmittelleitung gewährleisten können. Insbesondere bei Anwendungen, bei denen hohe Fluiddrücke auftreten, besteht die Gefahr eines versehentlichen Lösens der Druckmittelleitung. Im Falle der FR-A-1316971 wird daher zur Verstärkung der Spannkraft ein zusätzliches konisches Spreizelement in den Druckmittelschlauch eingeführt, was allerdings zu einem komplizierten Aufbau führt und die Montage und Demontage des anzuschließenden Druckmittelschlauches erschwert.

Aus der EP-A-0811801 geht eine Anschlussvorrichtung hervor, deren Spannzange über zwei axial beabstandete Spannzonen verfügt, die dadurch mit einer eingesteckten Druckmittelleitung zusammenarbeiten, dass die Spannzange axial zusammengedrückt wird.

Es ist die Aufgabe der vorliegenden Erfindung, eine Anschlussvorrichtung der eingangs genannten Art zu schaffen, die bei einfachem Aufbau ungeachtet eventueller Fertigungstoleranzen im Außendurchmesser der anzuschließenden Druckmittelleitung auch bei hoher Druckbeaufschlagung eine sichere Fixierung der anzuschließenden Druckmittelleitung gewährleistet.

Zur Lösung dieser Aufgabe ist vorgesehen, dass die Greifzähne lokal auf zwei axial beabstandete Spannzonen beschränkt sind, die den beiden axialen Endbereichen der Spannzange zugeordnet und durch eine unverzahnte Zwischenzone voneinander getrennt sind, wobei die mit Greifzähnen versehenen Endbereiche der Spannarme in der einen Spannzone zumindest im wesentlichen unabhängig von denjenigen in der anderen Spannzone radial bewegbar sind und die zweite Beaufschlagungsfläche in dem axial zwischen den beiden Spannzonen liegenden Bereich mit der Spannzange zusammenarbeitet.

Auf diese Weise ergibt sich eine Anschlussvorrichtung, deren Spannzange über den größten Teil ihrer Länge unverzahnt ausgeführt ist und die lediglich lokal begrenzt im Bereich ihrer axialen Enden über mit Greifzähnen ausgestattete wirksame Spannzone verfügt. Dies hat zunächst den Effekt, dass die über den Betätigungskörper eingeleiteten Beaufschlagungskräfte konzentriert an zwei Stellen der von der Einsteckseite her eingesteckten Druckmittelleitung angreifen und die daraus resultierenden Spannkräfte sehr hoch sind, so dass sich die Greifzähne ausreichend tief in das meist nachgiebige Material der Druckmittelleitung eingraben können. Bedingt durch die voneinander unabhängige radiale Verformbarkeit der die Greifzähne tragenden Endbereiche der beiden Spannzonen, ergibt. sich weiterhin eine Art schwimmende Lagerung der Spannarme der Spannzange, sodass sich die über den Betätigungskörper eingeleiteten Beaufschlagungskräfte tatsächlich auf beide Spannzonen verteilt und die Druckmittelleitung gleichzeitig durch die Greifzähne beider Spannzonen gehalten wird. Derjenige axiale Endbereich eines Spannarmes, der beim Verschrauben des Betätigungskörpers mit einem Greifzahn zuerst am Außenumfang der eingesteckten Druckmittelleitung anliegt, definiert eine Momentan-Schwenkstelle, um die der Schwenkarm beim anschließenden weiteren Zuschrauben des Betätigungskörpers verschwenkt wird, bis auch der oder die Greifzähne der entgegengesetzten Spannzone an der Druckmittelleitung angreifen. Ein weiterer Vorteil dieser definierten Kräfteverteilung ist darin zu sehen, dass die Anschlussvorrichtung in der Lage ist, toleranzbedingte Abweichungen im Außendurchmesser anzuschließender Druckmittelleitung in relativ weitem Rahmen zu kompensieren. Dadurch eignet sich die Anschlussvorrichtung auch zur Verwendung mit überhaupt nicht oder lediglich innen kalibrierten Druckmittelschläuchen, die sich verhältnismäßig einfach herstellen, lassen. Ein weiterer Vorteil besteht darin, daß zur Aktivierung der Spannarme keine Relativbewegung der eingesteckten Druckmittelleitung bezüglich dem Grundkörper erforderlich ist, so daß die Druckmittelleitung axial unbeweglich gehalten werden kann. Dies begünstigt unter anderem auch die Verwendung bei Vakuumanwendungen.

Vorteilhafte Weiterbildungen der Erfindung gehen aus den Unteransprüchen hervor.

In besonders zweckmäßiger Ausgestaltung verfügt die Spannzange über zwei Gruppen von über den Umfang verteilten Längsschlitzen, die sich jeweils nur über eine Teillänge der Spannzange erstrecken und zu entgegengesetzten Stirnseiten offen sind. Hierbei ist von Vorteil, wenn sich die Längsschlitze der beiden Schlitzgruppen axial überlappen und eine abwechselnde Anordnung von Längsschlitzen der ersten und zweiten Schlitzgruppe vorhanden ist, so daß sich in Umfangsrichtung eine mäanderähnliche Ausgestaltung ergeben kann.

Um den Spannarmen ausreichend Spielraum für die beim Spannvorgäng auftretenden Verformungen zu gewähren, sind an den dem Strömungskanal zugeordneten Endbereichen der Spannarme zweckmäßigerweise radial nach außen ragende erste Haltevorsprünge vorgesehen, die mit geringem axialen Bewegungsspiel in eine nach radial innen hin offene Haltevertiefung des Grundkörpers eingreifen. Gleichzeitig ergibt sich damit eine verliersichere Fixierung der Spannzange am Grundkörper.

Auch der Betätigungskörper ist zweckmäßigerweise unverlierbar am Grundkörper gehalten. Dies geschieht beispielsweise dadurch, daß die Spannzange an ihrem zur Einsteckseite weisenden äußeren axialen Endbereich radial nach außen ragende zweite Haltevorsprünge aufweist, die von einer am Innenumfang des Betätigungskörpers vorgesehenen ringförmigen Anschlagschulter auf der axialen Innenseite hintergriffen werden. Die Bewegung des Betätigungskörpers ist somit begrenzt durch das Auflaufen der Anschlagschulter auf die zweiten Haltevorsprünge. Denkbar wäre allerdings auch eine unverlierbare Fixierung durch unmittelbares Zusammenwirken von Betätigungskörper und Grundkörper.

Die Spannarme können in den beiden Spannzonen über jeweils einen Greifzahn verfügen. Bei Bedarf sind allerdings auch mehrere, axial aufeinanderfolgende Greifzähne realisierbar, letzteres insbesondere an der äußeren Spannzone, die dem zur Einsteckseite weisenden Endbereich der Spannzange zugeordnet ist.

Der Eingriff zwischen Beaufschlagungskörper und Grundkörper kann als Schraubeingriff ausgeführt sein und dabei zweckmäßigerweise derart, daß weniger als eine Umdrehung des Betätigungskörpers erforderlich ist, um zwischen der Lösestellung und der Spannstellung "umzuschalten". Es bietet sich dabei an, den Schraubeingriff als Bajonettverbindung, als Steilgewindeverbindung oder als mehrgängige Gewindeverbindung auszuführen.

In besonders zweckmäßiger Ausgestaltung ist der Betätigungskörper axial verschiebbar am Grundkörper gelagert, wobei sich die axiale Verlagerung des Betätigungskörpers durch eine Verschiebebewegung relativ zum Grundkörper und zur Spannzange hervorrufen läßt. Auf diese Weise ergibt sich unter anderem eine vereinfachte manuelle werkzeuglose Betätigung. Vorzugsweise wird die Spannstellung durch einen Rasteingriff zwischen dem Betätigungskörper und der Spannzange bzw. deren Spannarmen realisiert und definiert. Eine derartige Bauform ist im übrigen auch dann vorteilhaft, wenn die Spannzange einen anderen als den bisher geschilderten Aufbau hat und beispielsweise über nur eine Spannzone verfügt.

Durch die unverlierbare gegenseitige Fixierung von Grundkörper, Spannzange und Betätigungskörper liegt eine als einheitliches Bauteil handhabbare Anschlußvorrichtung vor. Ist der Grundkörper in einer Weise ausgestaltet, daß er eine Verbindung zwischen einer anzuschließenden Druckmittelleitung und einem fluidtechnischen Bauteil, beispielsweise einem Ventil, ermöglicht, kann am bauteilseitigen Abschnitt des Grundkörpers ebenfalls unverlierbar ein geeigneter Dichtungsring gehaltert sein.

Nachfolgend wird die Erfindung anhand der beiliegenden Zeichnung näher erläutert. In dieser zeigen:
- Figur 1: eine erste Bauform der erfindungsgemäßen Anschlußvorrichtung im Längsschnitt bei in der Lösestellung befindlichem Betätigungskörper, gemäß Schnittlinie I-I aus Figur 2, wobei eine anzuschließende und bereits eingesteckte Druckmittelleitung strichpunktiert angedeutet ist,
- Figur 2: eine Stirnansicht der beim Ausführungsbeispiel der Figur 1 verwendeten Spannzange auf den inneren Endbereich gemäß Schnittlinie II-II aus Figur 1,
- Figur 3: den beim Ausführungsbeispiel der Figur 1 verwendeten Betätigungskörper im Längsschnitt in Alleindarstellung,
- Figur 4: eine Ansicht einer Spannzange mit Blick gemäß Pfeil IV in Figur 1 von radial innen her auf die Innenfläche, wobei zur Vereinfachung der Darstellung die Krümmung vernachlässigt worden ist,
- Figur 5: den in Figur 1 markierten Ausschnitt V eines weiteren Ausführungsbeispiels der Anschlußvorrichtung mit modifizierter Spannzange,
- Figur 6: eine weitere Bauform der erfindungsgemäßen Anschlußvorrichtung bei in der Lösestellung befindlichem Betätigungskörper in einer der Figur 1 entsprechenden Darstellungsweise, und
- Figur 7: die Anschlußvorrichtung gemäß Figur 6 bei in Spannstellung befindlichem Betätigungskörper.

Die in der Zeichnung gezeigten Anschlußvorrichtungen verfügen über einen länglichen Grundkörper 1, der koaxial von einem Strömungskanal 2 durchsetzt ist. Im vorderen Bereich des Grundkörpers 1 ist eine hülsenähnliche Spannzange 3 gehalten, wobei bezüglich des zugeordneten vorderen Endabschnittes 4 des Strömungskanals 2 eine koaxiale Ausrichtung vorliegt. Ferner ist im Bereich der Vorderseite des Grundkörpers 1 ein hülsenähnlicher Betätigungskörper 5 in koaxialer Ausrichtung bezüglich des Endabschnittes 4 und der Spannzange 3 fixiert, der die Spannzange 3 außerdem koaxial umschließt.

Die dem Betätigungskörper 5 zugeordnete Axialseite der Anschlußvorrichtung sei nachfolgend als Einsteckseite 6 bezeichnet. Ausgehend von ihr läßt sich eine anzuschließende, in der Regel aus flexiblem und meist aus gummielastischem Material bestehende, nachfolgend als Druckmittelschlauch bezeichnete Druckmittelleitung derart in die Anschlußvorrichtung einstecken, daß sie den Betätigungskörper 5 und die Spannzange 3 durchsetzt und dabei mit ihrem vorderen Endabschnitt 8 in den der Spannzange 3 axial nachgeordneten Bereich des Endabschnittes 4 des Strömungskanals 2 hineinragt. Der vorliegend verwendete Begriff "Druckmittelschlauch" soll sowohl flexible, gummielastische Schlauchleitungen als auch starre rohrartige Leitungen umfassen, da sich die Anschlußvorrichtung zur Fixierung von Leitungen beliebigen Materials und insbesondere beliebiger Härte eignet. Sowohl Druckmittelleitungen aus hartem Material als auch weiche Kunststoffschläuche, z.B. aus PVC, lassen sich festlegen.

Die der Einsteckseite 6 axial entgegengesetzte Rückseite der Anschlußvorrichtung 2 bildet eine Befestigungsseite 11, an der der Grundkörper 1 eine die Befestigung an einem fluidtechnischen Bauteil, beispielsweise an einem Ventil oder einem Arbeitszylinder, ermöglichende Befestigungspartie 12 aufweist. Diese ist beim Ausführungsbeispiel schaftartig ausgeführt und trägt ein Außengewinde 13, so daß sie in eine ein Innengewinde aufweisende Aufnahmebohrung des fluidtechnischen Bauteils einschraubbar ist. Diese Aufnahmebohrung kommuniziert mit einem Fluidkanal des fluidtechnischen Bauteils, der somit in Strömungsverbindung mit dem Strömungskanal 2 der Anschlußvorrichtung steht, der seinerseits mit dem Schlauchkanal 9 des eingesteckten Druckmittelschlauches 7 kommuniziert.

Die schaftartige Befestigungspartie 12 könnte auch gewindelos ausgeführt und durch Einpressen in einer Anschlußbohrung festgelegt werden. Es wäre ferner denkbar, als Grundkörper 1 kein separates Bauteil vorzusehen, sondern einen beispielsweise von einem Gehäuseteil gebildeten Körper des fluidtechnischen Bauteils als Grundkörper heranzuziehen und derart auszubilden, daß die übrigen Bestandteile der Anschlußvorrichtung 2 daran festlegbar sind.

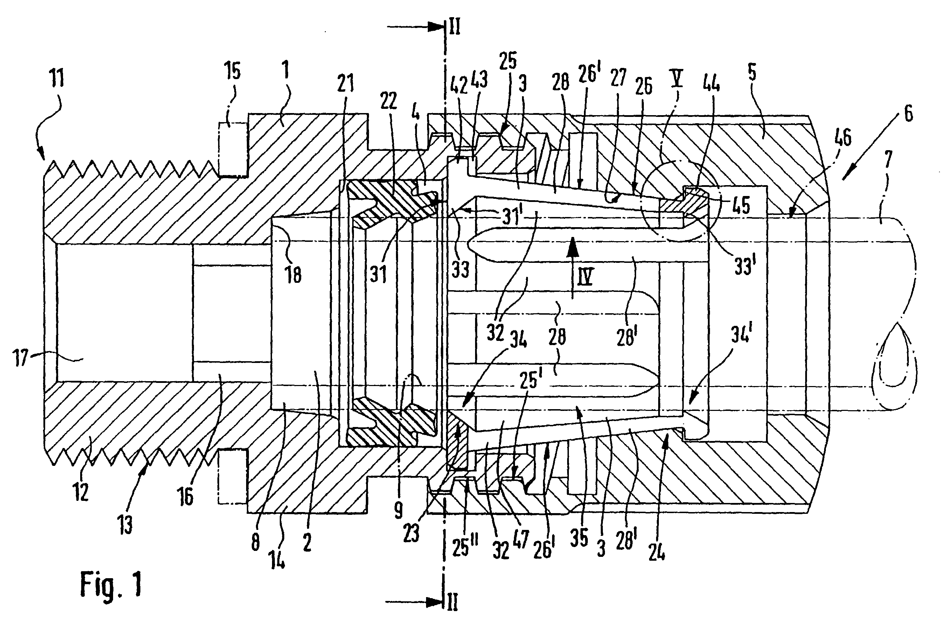

Bei den Ausführungsbeispielen verfügt der Grundkörper 1 axial im Anschluß an die Befestigungspartie 12 zur Einsteckseite 6 hin über einen radial nach außen ragenden, bundartigen Ringvorsprung 14, dem zur Befestigungspartie 12 hin ein in Figur 1 nur strichpunktiert angedeuteter Dichtungsring 15 koaxial vorgelagert ist, der die Befestigungspartie 12 konzentrisch umschließt. Er dient bei eingeschraubtem Grundkörper 1 zur Abdichtung zwischen diesem Grundkörper 1 und dem fluidtechnischen Bauteil. Zweckmäßigerweise ist der Dichtungsring 15 unverlierbar am Grundkörper 1 gehalten.

Der Ringbund 14 kann eine Angriffspartie zum lösbaren Ansetzen eines Schraubwerkzeuges aufweisen und kann zu diesem Zweck am Außenumfang mehreckförmig und beispielsweise sechseckig konturiert sein. Alternativ kann aber auch, wie beim Ausführungsbeispiel der Figur 1 verdeutlicht, eine zylindrische Umfangsfläche des Ringbundes 14 vorliegen, wobei eine Werkzeug-Angriffspartie 16 in den Strömungskanal 2 integriert ist, indem dieser einen von der Einsteckseite 6 her zugänglichen mehreckförmigen Längenabschnitt aufweist, der insbesondere als Innensechskant ausgebildet ist. Mit Hilfe eines an der Werkzeug-Angriffspartie 16 angesetzten Werkzeuges vereinfacht sich das Einschrauben der Befestigungspartie 12 in eine mit einem Gewinde versehene Anschlußbohrung.

Der der Einsteckseite 6 zugewandte Endabschnitt 4 des Strömungskanals 2 im Innern des Grundkörpers 1 ist bezüglich des sich anschließenden und die Befestigungspartie 12 durchsetzenden Kanalabschnittes 17 erweitert ausgeführt. Dadurch ergibt sich im Übergangsbereich eine zur Einsteckseite 6 weisende ringförmige Anschlagschulter 18, die den Einsteckweg des Druckmittelschlauches 7 begrenzt, indem dieser bis zur Anlage an der Anschlagschulter 18 in den Endabschnitt 4 einsteckbar ist.

Axial außerhalb der ersten Anschlagschulter 18 befindet sich eine einen größeren Durchmesser aufweisende gleichgerichtete zweite ringförmige Anschlagschulter 21. Zwischen dieser und der Spannzange 3 ist ein insbesondere mit Dichtlippen versehener Dichtring 22 gehalten, der den eingesteckten Druckmittelschlauch 7 umschließt und zwischen diesem und dem Grundkörper 1 fluiddicht abdichtet.

Die hülsenähnliche Spannzange 3 ist mit ihrem zur Befestigungsseite 11 weisenden inneren axialen Endbereich 23 in dem erweiterten Endabschnitt 4 des Strömungskanals 2 aufgenommen und gehalten. Mit ihrem entgegengesetzten äußeren axialen Endbereich 24 ragt sie axial aus dem Grundkörper 1 zur Einsteckseite 6 hin heraus. Beim Ausführungsbeispiel beträgt die Länge des herausragenden Längenabschnittes der Spannzange 3 etwa zwei Drittel des im Innern des Strömungskanals 2 angeordneten Längenabschnittes.

Der hülsenähnliche Betätigungskörper 5 steht mit dem Grundkörper 1 bezüglich diesem axial verlagerbar in Eingriff. Beim Ausführungsbeispiel der Figur 1 liegt ein Schraubeingriff 25 vor, so daß eine relative Drehbewegung zwischen den beiden Körpern 5, 1 gleichzeitig eine relative Axialbewegung zwischen den beiden Körpern 5, 1 bewirkt. Beim Ausführungsbeispiel der Figur 1 findet der Schraubeingriff 25 zwischen dem Außenumfang des Grundkörpers 1 und dem Innenumfang des Betätigungskörpers 5 statt. Eine umgekehrte Anordnung wäre allerdings ebenfalls möglich.

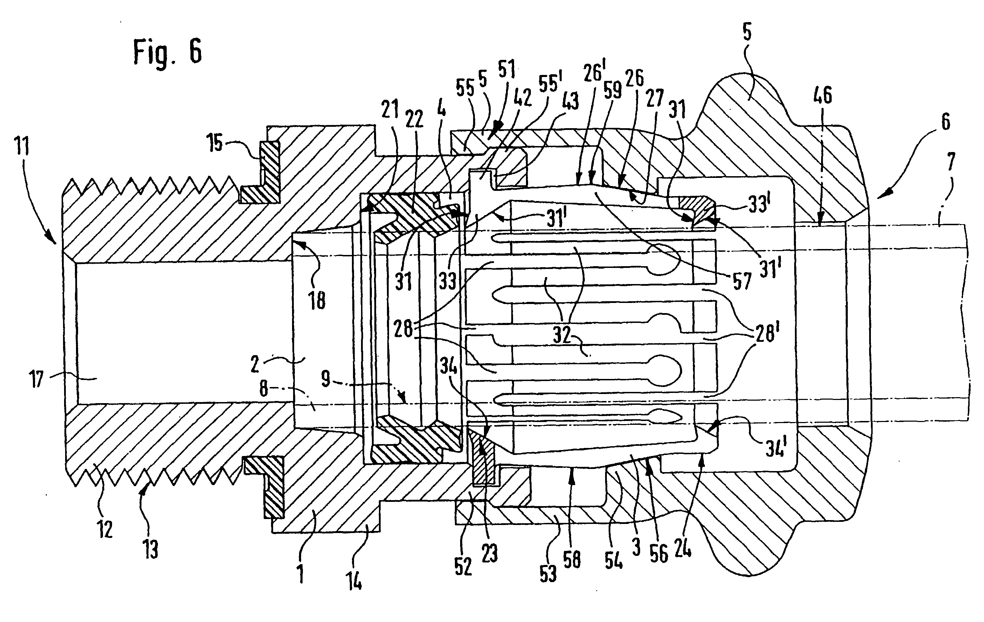

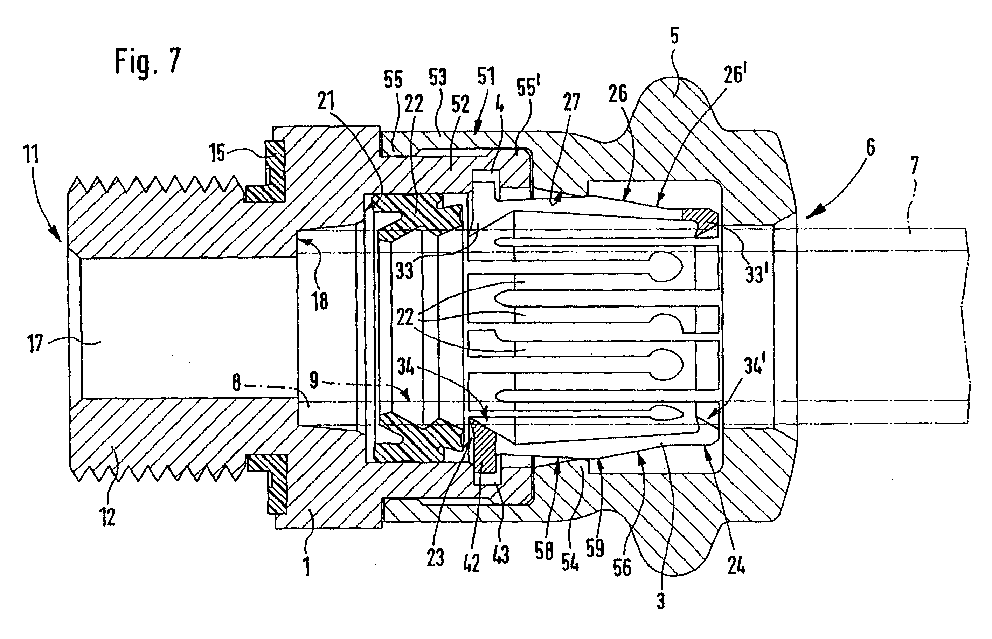

Beim Ausführungsbeispiel der Figuren 6 und 7 stehen der Betätigungskörper 5 und der Grundkörper 1 in Verschiebeeingriff 51, so daß der Betätigungskörper 5 ohne Drehbewegung relativ zum Grundkörper 1 manuell axial verschoben werden kann. Hierbei wird zweckmäßigerweise der vordere Endabschnitt 52 des Grundkörpers 1 von einem hülsenartigen Endabschnitt 53 des Betätigungskörpers 5 axial verschiebbar außen umgriffen und je nach Verschiebestellung ergibt sich eine mehr oder weniger große axiale Überlappung, was aus einem Vergleich der Figuren 6 und 7 gut ersichtlich ist.

Die Spannzange 3 verfügt am Außenumfang über eine sich über wenigstens einen Teil ihrer Länge in Richtung zur Einsteckseite 6 hin konisch verjüngende erste Beaufschlagungsfläche 26. Dieser ist eine zweckmäßigerweise mit identischem Konuswinkel versehene konische zweite Beaufschlagungsfläche 27 zugeordnet, die sich am Innenumfang des Betätigungskörpers 5 befindet und sich ebenfalls zur Einsteckseite 6 hin verjüngt. Die zweite Beaufschlagungsfläche 27 umschließt die Spannzange 3 im Bereich ihrer ersten Beaufschlagungsfläche 26 in dem dem Grundkörper 1 axial vorgelagerten Bereich. Dabei ist die axiale Länge der zweiten Beaufschlagungsfläche 27 geringer als diejenige der ersten Beaufschlagungsfläche 26. Ferner befindet sich die zweite Beaufschlagungsfläche 27 vorzugsweise an einem bezüglich axial beidseits benachbarten Bereichen radial nach innen ragenden Ringvorsprung 54.

Die Spannzange 3 ist durch eine Mehrzahl von Längsschlitzen 28, 28' in über den Umfang verteilte, radial bewegbare Spannarme 32 unterteilt. Die erste Beaufschlagungsfläche 26 setzt sich daher aus von den einzelnen Spannarmen 32 definierten, insbesondere schräg nach radial außen weisenden Flächenabschnitten 26' zusammen.

Die einzelnen Spannarme 32 sind mit im wesentlichen radial nach innen ragenden Greifzähnen 33, 33' versehen. Allerdings beschränkt sich die Anordnung dieser Greifzähne 33, 33' vorzugsweise lokal auf zwei axial beabstandete Spannzonen 34, 34', die den beiden axialen Endbereichen 23, 24 der Spannzange 3 bzw. der Spannarme 32 zugeordnet sind. Der größte Teil der Baulänge der Spannzange 32 bildet am Innenumfang eine unverzahnte Zwischenzone 35, die die beiden Spannzonen 34, 34' voneinander trennt.

Auf Grund der geschlitzten Ausführungsform der Spannzange 3 ergibt sich eine voneinander unabhängige radiale Bewegbarkeit der mit Greifzähnen 33 versehenen inneren Endbereiche 23 bezüglich der ebenfalls mit Greifzähnen 33' versehenen äußeren Endbereiche 24 der Spannarme 32 und umgekehrt.

Die Figuren 1 und 6 zeigen den Betätigungskörper 5 in einer bezüglich des Grundkörpers 1 in Richtung zur Einsteckseite 6 verlagerten Lösestellung. Die zweite Beaufschlagungsfläche 27 liegt hier an dem axial näher zur Einsteckseite 6 liegenden Endabschnitt der ersten Beaufschlagungsfläche 26 der Spannzange 3 an. In dieser Lösestellung könnte auch ein gewisses Spiel zwischen den beiderseitigen Beaufschlagungsflächen 26, 27 vorhanden sein. Jedenfalls sind in dieser Lösestellung die Spannarme 32 nicht oder nur geringfügig nach radial innen vorgespannt, und der Innendurchmesser der Spannzange 3 nimmt ein Maximum an, das ein Einstecken des Druckmittelschlauches 7 von der Einsteckseite 6 her durch den Betätigungskörper 5 und die Spannzange 3 hindurch bis zu dem Endabschnitt 4 gestattet. Desgleichen ermöglicht die Lösestellung ein Herausziehen des Druckmittelschlauches 7 aus der Anschlußvorrichtung.

Um den eingesteckten Druckmittelschlauch 7 lösbar fest an der Anschlußvorrichtung zu fixieren, wird der Betätigungskörper 5 axial in Richtung zum Grundkörper 1 verlagert. Hierzu wird er beim Ausführungsbeispiel der Figur 1 um seine Längsachse relativ zum Grundkörper 1 verdreht, so daß er sich infolge des Schraubeingriffes 25 axial in Richtung zum Grundkörper 1 verlagert. Bei der Bauform der Figuren 6 und 7 wird der Betätigungskörper 5 durch Aufbringen einer geeigneten Kraft einfach manuell axial verschoben. Dabei verlagert sich jeweils auch die am Betätigungskörper 5 vorgesehene zweite Beaufschlagungsfläche 27 gleichgerichtet relativ zu der sich am Grundkörper 1 axial abstützenden Spannzange 3. Dies führt dazu, daß die zweite Beaufschlagungsfläche 27 auf der ersten Beaufschlagungsfläche 26 der Spannzange 3 axial nach hinten gleitet, wobei die Spannarme 32 gezwungen werden, sich nach radial innen zu verlagern bzw. zu verformen. Dabei gelangt der Betätigungskörper 5 in eine weiter auf den Grundkörper 1 aufgeschraubte bzw. aufgeschobene Spannstellung (Figur 7), in der die an den Spannarmen 32 vorgesehenen Greifzähne 33, 33' schließlich in den Außenumfang des flexiblen Druckmittelschlauches 7 eingedrückt sind und sich praktisch verbeißen, so daß der Druckmittelschlauch 7 nicht mehr herausgezogen werden kann.

Zweckmäßigerweise sind die Greifzähne 33, 33' sägezahnartig ausgeführt und haben axial innen eine radiale oder zur Einsteckseite 6 hin schräg nach radial außen verlaufende innere Flanke 31, an die sich axial außen eine schräge äußere Flanke 31' anschließt, die ebenfalls zur Einsteckseite 6 hin schräg nach radial außen verläuft. Stößt der Druckmittelschlauch 7 beim Einstecken an eine der axial nach außen weisenden äußeren schrägen Flanken 31', wird der betreffende Spannarm 32 radial nach außen gedrückt. Wird am eingesteckten und festgespannten Druckmittelschlauch 7 gezogen, bildet die axial nach innen weisende innere Flanke 31 einen festen Widerstand und der betreffende Greifzahn 31, 31' gräbt sich noch tiefer in den Druckmittelschlauch 7 ein.

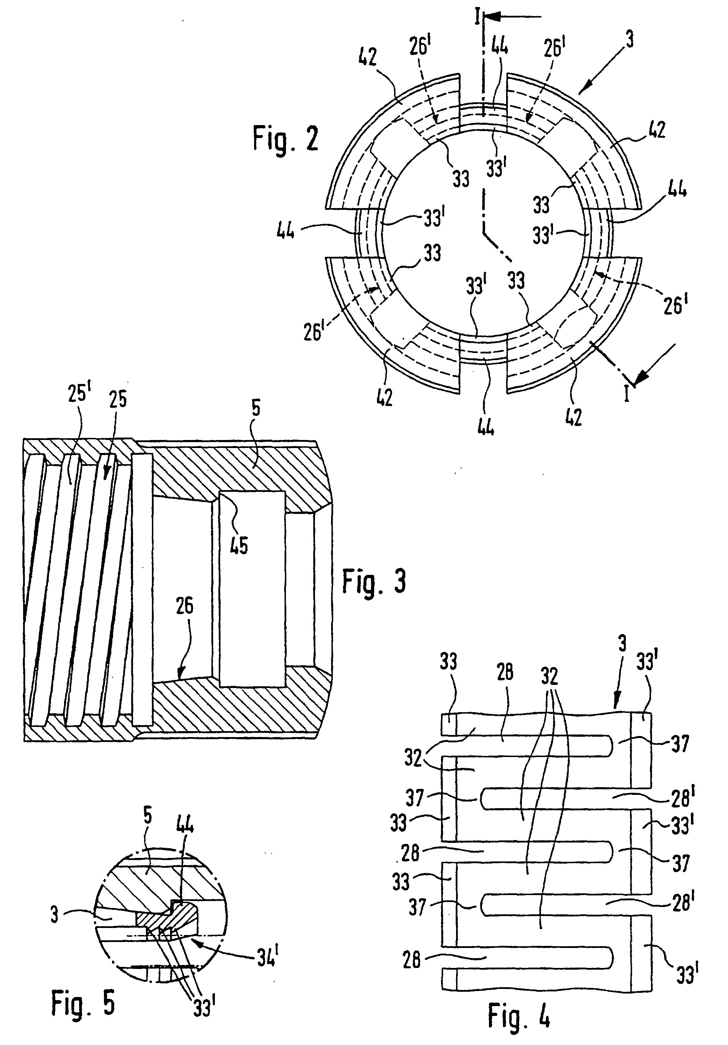

Der Schraubeingriff 25 ist beim Ausführungsbeispiel der Figur 1 so ausgelegt, daß zum Verbringen zwischen der Lösestellung und der Spannstellung weniger als eine Umdrehung des Betätigungskörpers 5 erforderlich ist. Beim Ausführungsbeispiel wird dies dadurch erreicht, daß der Schraubeingriff 25 als Steilgewindeverbindung ausgeführt ist, die bei geringem Drehwinkel bereits eine große axiale Relativbewegung hervorruft. Aus Figur 3 geht das beim Ausführungsbeispiel am Betätigungskörper 5 vorgesehene Innengewinde 25', das zur Bildung des Schraubeingriffes 25 mit einem Außengewinde 25" des Grundkörpers 2 zusammenwirkt, nochmals deutlich hervor.

Alternativ zu der Steilgewindeverbindung könnte auch eine Bajonettverbindung oder eine mehrgängige Gewindeverbindung vorgesehen sein. Zweckmäßigerweise erfolgt die Auslegung derart, daß eine relative 90°-Drehbewegung zwischen dem Betätigungskörper 5 und dem Grundkörper 1 ausreicht, um zwischen der Lösestellung und der Spannstellung zu variieren.

Ein bevorzugter Aufbau der Spannzange 3 geht insbesondere auch aus Figur 4 hervor. Demnach verfügt die Spannzange über zwei Gruppen von über den Umfang verteilten Längsschlitzen 28, 28', die sich jeweils nur über eine Teillänge der Spannzange 3 erstrecken, wobei die Längsschlitze 28 der einen Gruppe zur einen Stirnseite und die Längsschlitze 28' der anderen Gruppe zur entgegengesetzten Stirnseite der Spannzange 3 offen sind. Es liegt insbesondere eine in Umfangsrichtung der Spannzange abwechselnde Anordnung von Längsschlitzen 28, 28' der ersten und zweiten Schlitzgruppe vor, wobei sich diese Längsschlitze 28, 28' axial über eine verhältnismäßig große Länge überlappen, wobei der Überlappungsbereich etwa mit der Zwischenzone 35 zusammenfällt. Somit ergibt sich beim Ausführungsbeispiel ein in Umfangsrichtung geschlossener Aufbau der Spannzange, deren durch die Längsschlitze 28, 28' voneinander getrennten Spannarme 32 in dem dem geschlossenen axialen Ende 36 des jeweils zugeordneten Längsschlitzes 28, 28' axial vorgelagerten Bereich durch einen Verbindungsabschnitt 37 miteinander verbunden sind. Daraus resultiert ein mäanderförmiger Umfangsverlauf der Spannzange 3, wie er aus Figur 4 ersichtlich ist. Die Spannzange 3 könnte im übrigen auch an einer Stelle ihres Umfanges axial und radial durchgehend geschlitzt sein.

Die Greifzähne 33, 33' sind im Bereich der Verbindungsabschnitte 37 vorgesehen. Dabei sind die Greifzähne 33, 33' insbesondere so ausgebildet, daß im Bereich jedes Verbindungsabschnittes 37 jeweils mindestens ein sich über beide aneinander angrenzende Spannarme 32 hinweg erstreckender Greifzahn 33, 33' vorgesehen ist. Man kann sich hier auch ringförmige Greifzähne 33, 33' vorstellen, die lediglich von den Längsschlitzen 28, 28' unterbrochen sind. Wie aus Figur 2 ersichtlich, haben sie einen bogenähnlichen gekrümmten Verlauf mit an den Außendurchmesser des zu spannenden Druckmittelschlauches 7 angepaßter Krümmung.

Die Spannzange 3 ist vorzugsweise unverlierbar an dem Grundkörper 1 gehalten. Dies wird insbesondere dadurch erreicht, daß sie an ihrem inneren Endbereich 23 über an den Spannarmen 32 vorgesehene und radial nach außen ragende erste Haltevorsprünge 42 verfügt, die in eine nach radial innen offene, nutartige Haltevertiefung 43 eingreifen, die am Innenumfang des erweiterten Endabschnittes 4 des Strömungskanals 2 eingelassen ist. Die axial gemessene Breite der ersten Haltevorsprünge und der Haltevertiefung 43 ist derart aufeinander abgestimmt, daß ein geringfügiges axiales Bewegungsspiel vorliegt, das eine relative Beweglichkeit der Spannarme 32 im Bereich der ersten Haltevorsprünge 42 relativ zum Grundkörper 1 gewährleistet.

Zur Montage am Grundkörper 1 wird die Spannzange 3 kurzzeitig an ihrem inneren Endbereich 23 radial konzentrisch zusammengedrückt und in die Haltevertiefung 43 eingerastet.

Auch der Betätigungskörper 5 ist an dem Grundkörper 1 unverlierbar gehalten. Hierzu kann gemäß Ausführungsbeispiel der Figur 1 die Spannzange 3 an ihrem äußeren axialen Endbereich 24 mit von den dort befindlichen Endbereichen der Spannarme 32 radial nach außen ragenden zweiten Haltevorsprüngen 44 versehen sein. Diese zweiten Haltevorsprünge 44 werden dann von einer am Innenumfang des Betätigungskörpers 5 vorgesehenen, zur Einsteckseite 6 weisenden ringförmigen Anschlagschulter 45 an der zum Grundkörper 1 weisenden inneren Axialseite hintergriffen. Die Anordnung ist so getroffen, daß die Anschlagschulter 45 beim Lösen des Betätigungskörpers 5 auf die zweiten Haltevorsprünge 44 aufläuft, solange der Schraubeingriff 25 noch vorhanden ist. Es wird somit verhindert, daß der Betätigungskörper 5 versehentlich zu weit vom Grundkörper 1 abgeschraubt wird.

Die Anschlagschulter 45 bildet beim Ausführungsbeispiel der Figur 1 gleichzeitig die einsteckseitige Begrenzung der zweiten Beaufschlagungsfläche 27, die auf der entgegengesetzten Axialseite bis zum Beginn des Innengewindes 25' des Betätigungskörpers 5 verläuft und sich über ihre gesamte Länge hinweg in Richtung zur Einsteckseite 6 konisch verjüngt. Die an der Spannzange 3 vorgesehene erste Beaufschlagungsfläche 26 erstreckt sich dabei axial zwischen den ersten und zweiten Haltevorsprüngen 42, 44. Ihre wirksame Länge beschränkt sich allerdings auf den dem Grundkörper 1 axial vorgelagerten Abschnitt.

Beim Ausführungsbeispiel der Figuren 6 und 7 ergibt sich die unverlierbare Fixierung des Betätigungskörpers 5 dadurch, daß sich sein hülsenartiger Endabschnitt 53 und der vordere Endabschnitt 52 des Grundkörpers 1 mit insbesondere ringförmigen Radialvorsprüngen 55, 55' hintergreifen. Diese können zur Vorgabe der Lösestellung axial aneinander anliegen (Figur 6).

Die Spannzange 3 ist insgesamt bezüglich des Grundkörpers 1 und des Betätigungskörpers 5 praktisch schwimmend aufgehängt. Dies hat zur Folge, daß sich die Spannarme 32 beim Spannvorgang mit ihren Greifzähnen 33, 33' gleichmäßig und ohne Verkantung am Außenumfang 46 des eingesteckten Druckmittelschlauches 7 anlegen können. Wird der Betätigungskörper 5 im Spannsinne bezüglich des Grundkörpers 1 verlagert, gelangen beliebige der Greifzähne 33, 33' zuerst in Kontakt mit dem Außenumfang 46 des Druckmittelschlauches 7. Die Kontaktstelle bildet beim weiteren Spannvorgang eine Schwenk- bzw. Drehstelle, an der sich der betreffende Spannarm 32 abstützt und um die er beim weiteren Spannvorgang mit seinem entgegengesetzten axialen Ende ebenfalls nach innen geschwenkt wird, bis der dortige Greifzahn ebenfalls am Druckmittelschlauch 7 anliegt. Auf diese Weise erreicht man eine sichere Verteilung der vom Betätigungskörper 5 auf die Spannarme 32 ausgeübten Beaufschlagungskräfte auf die beiden Spannzonen 34, 34' und somit auf zwei axial beabstandete Bereiche des Druckmittelschlauches 7. Durch entsprechende Anordnung und Ausgestaltung der beiderseitigen Beaufschlagungsflächen 26, 27 kann beispielsweise erreicht werden, daß die im Bereich der beiden Spannzonen 34, 34' auf den Druckmittelschlauch 7 ausgeübten Spannkräfte etwa gleich groß sind. Es ergibt sich daraus auch eine Querabstützung des Druckmittelschlauches 7 über eine verhältnismäßig große Länge.

Da zwischen den beiden Spannzonen 34, 34' keine Greifzähne vorhanden sind, wird ferner erreicht, daß nicht durch eine unerwünschte sonstige Abstützung zwischen Spannzange 3 und Druckmittelschlauch 7 eine Verringerung der in den Spannzonen 34, 34' wirksamen Spannkräfte herbeigeführt wird. So ist die Spannzange 3 beim Ausführungsbeispiel so ausgeführt, daß sie im Bereich der Zwischenzone 35 bezüglich der beiden Spannzonen 34, 34' radial nach außen zurückgesetzt ist, so daß dort auch im gespannten Zustand ein ringförmiger Zwischenraum 47 zwischen den Spannarmen 32 und dem Außenumfang 46 des Druckmittelschlauches 7 verbleibt.

Während beim Ausführungsbeispiel der Figur 1 insbesondere durch eine geeignete Auswahl der Gewindesteigung eine sichere Fixierung zwischen dem Betätigungskörper 5 und dem Grundkörper 1 in der Spannstellung erzielt wird, empfiehlt sich bei einer Bauform mit axial linear verschiebbarem Betätigungskörper 5 gemäß Figuren 6 und 7 eine Fixierung der Spannstellung durch eine Art Rastverbindung. Diese wird zweckmäßigerweise dadurch realisiert, daß der Betätigungskörper 5 in der Spannstellung mit der Spannzange 3 in Rasteingriff steht.

So sind beim Ausführungsbeispiel der Figuren 6 und 7 die an den Spannarmen 32 vorhandenen Flächenabschnitte 26' axial in Abschnitte unterschiedlichen Verlaufes unterteilt. Dem axial äußeren Endbereich 24 zugeordnet ist ein sich in Richtung zur Einsteckseite 6 hin insbesondere konisch verjüngender Aktivierungsabschnitt 56 vorgesehen, an dessen der Einsteckseite 6 abgewandten axialen Endbereich 57 sich ein bezüglich diesem radial zurückgesetzter Halteabschnitt 58 anschließt. Letzterer verjüngt sich beim Ausführungsbeispiel ausgehend vom axialen Endbereich 57 des Aktivierungsabschnittes 56 in Richtung zum Grundkörper 1, wobei wiederum ein konischer Verlauf empfehlenswert ist. Zwischen dem Aktivierungsabschnitt 56 und dem Halteabschnitt 58 ergibt sich somit eine Art Übergangskuppe 59 mit vorzugsweise kantigem Übergang.

In der aus Figur 6 hervorgehenden Lösestellung befindet sich die im Vergleich zur ersten Beaufschlagungsfläche 26 kürzere zweite Beaufschlagungsfläche 27 des Betätigungskörpers 5 im Bereich des Aktivierungsabschnittes 26. Wird nun der Betätigungskörper 5 axial in Richtung zum Grundkörper 1 verlagert, gleitet die zweite Betätigungsfläche 27 entlang des Aktivierungsabschnittes 56, wobei sie infolge des Schrägverlaufes die Spannzange 3 aktiviert und die Spannarme 32 in der geschilderten Weise nach radial innen gegen den Außenumfang des eingesteckten Druckmittelschlauches 7 drückt. Beim Verschieben des Betätigungskörpers 5 gleitet die zweite Betätigungsfläche 27 schließlich über die Übergangskuppe 59 hinweg und gelangt in den Bereich des Halteabschnittes 58 der ersten Betätigungsfläche 26. Da dieser im Vergleich zur Übergangskuppe 59 radial zurückgesetzt ist, ergibt sich ein Hintergriff zwischen dem Ringvorsprung 54 des Betätigungskörpers 5 und der Spannzange 3, was man als Rasteingriff bezeichnen kann. Der Betätigungskörper 5 ist in der dann vorliegenden Spannstellung gegen ein versehentliches Zurückbewegen in die Lösestellung gesichert. Um letztere zu erhalten, ist am Betätigungskörper 5 zu ziehen, so daß die zweite Betätigungsfläche 27 wieder über die Übergangskuppe 59 hinweg in den Bereich des Aktivierungsabschnittes 56 gelangt.

Der Betätigungskörper 5 ist in der Spannstellung zweckmäßigerweise auch noch dadurch fixiert, daß er sich axial am Grundkörper 1 abstützt und somit zwischen der Spannzange 3 und dem Grundkörper 1 axial im wesentlichen unbeweglich festgelegt ist.

Die Steigung der ersten Betätigungsfläche 26 ist im Bereich des Halteabschnittes 58 zweckmäßigerweise geringer als im Bereich des entgegengesetzt geneigten Aktivierungsabschnittes 56. Dadurch wird insbesondere der Lösevorgang erleichtert.

Bei den Ausführungsbeispielen der Figuren 1, 6 und 7 ist die Spannzange 3 so ausgeführt, daß die Spannarme 32 im Bereich beider Spannzonen 34, 34' jeweils nur einen Greifzahn 33, 33' aufweisen. Allerdings wäre alternativ auch eine Mehrfachanordnung axial aufeinanderfolgender Greifzähne in einer oder beiden Spannzonen 34, 34' möglich. Anhand der Figur 5 ist eine Bauform gezeigt, bei der die Spannarme 32 im Bereich der axial außen angeordneten Spannzone 34' jeweils über mehrere, axial aufeinanderfolgend angeordnete Greifzähne 33' verfügen, während an der entgegengesetzten inneren Spannzone 34 stets nur ein Greifzahn vorgesehen ist. Im Falle einer Mehrfachanordnung bietet sich eine Doppelanordnung oder Dreifachanordnung von Greifzähnen an.

Das Material der verschiedenen Körper der Anschlußvorrichtung ist nach Bedarf auswählbar. Beim Ausführungsbeispiel besteht der Grundkörper 1 aus Metall, die Spannzange 3 und der Betätigungskörper aus Kunststoffmaterial. Auch eine vollständige Kunststoffausführung oder Metallausführung (z.B. aus Edelstahl) der Anschlußvorrichtung wäre denkbar. Speziell bei der aus federelastischem Material bestehenden Spannzange 3 würde sich auch eine Metallausführung oder eine kombinierte Kunststoff-Metall-Ausführung anbieten. Die Spannzange 3 könnte als Stanzbiegeteil ausgeführt sein, wobei zur Herstellung auf Flachmaterial zurückgegriffen wird, in das die Längsschlitze 28, 28' eingestanzt werden und das anschließend in die hülsenartige Form gebogen wird.

Zusammengefaßt lassen sich also mit der Anschlußvorrichtung bei entsprechender Ausgestaltung zahlreiche Vorteile verwirklichen. Durch die Spannzange 3 läßt sich eine doppelte Klemmung des eingesteckten Druckmittelschlauches an axial beabstandeten Bereichen verwirklichen. Es ist ferner eine schwimmende Lagerung der Spannzange mit automatischer Kraftverteilung möglich. Durch axial beidseitige Schlitzung der Spannzange erreicht man eine Federung im Bereich beider Spannzonen mit dementsprechend voneinander unabhängiger Spannwirkung. Obgleich als mehrteilige Vorrichtung konzipiert, stellt sich die Anschlußvorrichtung insgesamt als quasi einteilige Baueinheit dar. So läßt sich bei der Ausführungsform der Figuren 6 und 7 der Betätigungskörper mit seinem hülsenartigen Endabschnitt 53 im Rahmen einer Schnappverbindung unverlierbar am Grundkörper 1 fixieren. Die Anschlußvorrichtung eignet sich zur Herstellung von Fluidverbindungen für sowohl Überdruckanwendungen als auch Vakuumanwendungen. Aufgrund der Möglichkeit des Toleranzausgleiches der Spannzange 3 können auch unkalibrierte Druckmittelschläuche festgelegt werden. Im Falle der Bauform der Figuren 6 und 7 ergibt sich eine einfache Betätigung dadurch, daß der Betätigungskörper 5 durch axiale Drückbeaufschlagung in die Spannstellung und durch axiale Zugbeaufschlagung in die Lösestellung verbringbar ist. Der Aufbau insgesamt ermöglicht den Einsatz auch in Bereichen mit besonderem Anforderungsprofil, so beispielsweise in der Lebensmittelindustrie.

## Patentansprüche

1. Anschlussvorrichtung für Druckmittelleitungen
- mit einem einen Strömungskanal (2) aufweisenden Grundkörper (1),
- mit einer zum Einstecken einer Druckmittelleitung (7) vorgesehenen Einsteckseite (6),
- mit einer koaxial zu einem Endabschnitt (4) des Strömungskanals (2) an dem Grundköper (1) gehaltenen, durch Längsschlitze (28, 28') in über den Umfang verteilte und radial bewegbare Spannarme (32) unterteilten hülsenähnlichen Spannzange (3), die mit nach innen ragenden Greifzähnen (33, 33') versehen ist und deren Außenumfang eine sich über wenigstens einen Teil ihrer Länge in Richtung zur Einsteckseite (6) konisch verjüngende erste Beaufschlagungsfläche (26) definiert,
- und mit einem die Spannzange (3) über zumindest einen Teil ihrer Länge koaxial umschließenden, mit dem Grundkörper (1) bezüglich diesem axial verlagerbar in Eingriff stehenden hülsenähnlichen Betätigungskörper (5), der am Innenumfang eine der ersten Beaufschlagungsfläche (26) zugewandte, sich über wenigstens einen Teil ihrer Länge in Richtung zur Einsteckseite (6) konisch verjüngende zweite Beaufschlagungsfläche (27) definiert, wobei die beiden Beaufschlagungsflächen (26, 27) derart zusammenwirken können, dass die Greifzähne (33, 33') der Spannzange (3) gegen den Außenumfang (46) einer an der Einsteckseite (6) der Anschlussvorrichtung eingesteckten Druckmittelleitung (7) gedrückt werden,
**dadurch gekennzeichnet, dass** die Greifzähne (33, 33') lokal auf zwei axial beabstandete Spannzonen (34, 34') beschränkt sind, die den beiden axialen Endbereichen (23, 24) der Spannzange (3) zugeordnet und durch eine unverzahnte Zwischenzone (35) voneinander getrennt sind, wobei die mit Greifzähnen (33, 33') versehenen Endbereiche der Spannarme (32) in der einen Spannzone (34) zumindest im wesentlichen unabhängig von denjenigen in der anderen Spannzone (34') radial bewegbar sind und die zweite Beaufschlagungsfläche (27) in dem axial zwischen den beiden Spannzonen (34, 34') liegenden Bereich mit der Spannzange (3) zusammenarbeitet.

2. Anschlussvorrichtung nach Anspruch 1, **dadurch gekennzeichnet, dass** die beiderseitigen Beaufschlagungsflächen (26, 27) derart angeordnet und ausgebildet sind, dass die im Bereich der beiden Spannzonen (34, 34') auf die eingesteckte Druckmittelleitung (7) ausgeübten Spannkräfte etwa gleich groß sind.

3. Anschlussvorrichtung nach Anspruch 1 oder 2, **dadurch gekennzeichnet, dass** die am Betätigungskörper (5) vorgesehene zweite Beaufschlagungsfläche (27) kürzer ist als die an der Spannzange (3) vorgesehene erste Beaufschlagungsfläche.

4. Anschlussvorrichtung nach einem der Ansprüche 1 bis 3, **dadurch gekennzeichnet, dass** die Spannzange (3) über zwei Gruppen von über den Umfang verteilten Längsschlitzen (28, 28') verfügt, die sich jeweils nur über eine Teillänge der Spannzange (3) erstrecken und zu entgegengesetzten Stirnseiten der Spannzange (3) hin offen sind.

5. Anschlussvorrichtung nach Anspruch 4, **dadurch gekennzeichnet, dass** sich die Längsschlitze (28, 28') der beiden Schlitzgruppen axial überlappen.

6. Anschlussvorrichtung nach Anspruch 5, **dadurch gekennzeichnet, dass** die zweite Beaufschlagungsfläche (27) im Überlappungsbereich der beiden Schlitzgruppen mit der Spannzange (3) zusammenarbeitet.

7. Anschlussvorrichtung nach einem der Ansprüche 4 bis 6, **gekennzeichnet durch** eine in Umfangsrichtung der Spannzange (3) abwechselnde Anordnung von Längsschlitzen (28, 28') der ersten und zweiten Schlitzgruppe.

8. Anschlussvorrichtung nach einem der Ansprüche 1 bis 7, **dadurch gekennzeichnet, dass** die Spannzange (3) als Stanzbiegeteil ausgebildet ist.

9. Anschlussvorrichtung nach einem der Ansprüche 1 bis 8, **dadurch gekennzeichnet, dass** dem geschlossenen axialen Ende (36) jedes Längsschlitzes (28, 28') axial ein mit wenigstens einem Greifzahn (33, 33') versehener Endbereich (37) eines Spannarmes (32) benachbart ist.

10. Anschlussvorrichtung nach einem der Ansprüche 1 bis 9, **dadurch gekennzeichnet, dass** die Spannzange (3) zumindest mit ihrem inneren axialen Endbereich (23) in dem Endabschnitt (4) des Strömungskanals (2) aufgenommen ist, wobei sie mit von den zugeordneten Endbereichen der Spannarme (32) radial nach außen ragenden ersten Haltevorsprüngen (42) mit geringem axialen Bewegungsspiel in eine nach radial innen offene Haltevertiefung (43) des Grundkörpers (1) eingreift.

11. Anschlussvorrichtung nach einem der Ansprüche 1 bis 10, **dadurch gekennzeichnet, dass** die Spannzange (3) an ihrem zur Einsteckseite (6) weisenden äußeren axialen Endbereich (24) von den zugeordneten Endbereichen der Spannarme (32) radial nach außen ragende zweite Haltevorsprünge (44) aufweist, die von einer am Innenumfang des Betätigungskörpers (5) vorgesehenen ringförmigen Anschlagschulter (45) auf der axialen Innenseite hintergriffen sind.

12. Anschlussvorrichtung nach einem der Ansprüche 1 bis 11, **dadurch gekennzeichnet, dass** die Endbereiche der Spannarme (32) in wenigstens einer der beiden Spannzonen (34, 34') über mehrere, axial aufeinanderfolgend angeordnete Greifzähne (33, 33') verfügen.

13. Anschlussvorrichtung nach einem der Ansprüche 1 bis 12, **dadurch gekennzeichnet, dass** die erste Beaufschlagungsfläche (26) über ihre gesamte Länge hinweg einen sich in Richtung zur Einsteckseite (6) verjüngenden Verlauf hat.

14. Anschlussvorrichtung nach einem der Ansprüche 1 bis 12, **dadurch gekennzeichnet, dass** die erste Beaufschlagungsfläche (26) einen sich in Richtung zur Einsteckseite (6) konisch verjüngenden Aktivierungsabschnitt (56) aufweist, an dessen der Einsteckseite (6) abgewandten axialen Endbereich sich ein bezüglich diesem radial zurückgesetzter Halteabschnitt (58) anschließt, wobei die am Betätigungskörper vorgesehene zweite Beaufschlagungsfläche (27) axial kürzer als die erste Beaufschlagungsfläche (26) ausgebildet ist und beim axialen Verlagern des Betätigungskörpers (5) zwischen den beiden vorgenannten Abschnitten der ersten Beaufschlagungsfläche überwechselt.

15. Anschlussvorrichtung nach Anspruch 14, **dadurch gekennzeichnet, dass** sich der Halteabschnitt (58) ausgehend vom Aktivierungsabschnitt (56) zu seinem der Einsteckseite (6) abgewandten axialen Endbereich hin, insbesondere konisch, verjüngt.

16. Anschlussvorrichtung nach einem der Ansprüche 1 bis 15, **dadurch gekennzeichnet, dass** sich die zweite Beaufschlagungsfläche (27) an einem bezüglich axial beidseits benachbarten Bereichen des Betätigungskörpers (5) radial nach innen ragenden Ringvorsprung (54) befindet.

17. Anschlussvorrichtung nach einem der Ansprüche 1 bis 16, **dadurch gekennzeichnet, dass** der Betätigungskörper (5) mit dem Grundkörper (1) in Schraubeingriff steht, wobei die axiale Verlagerung des Betätigungskörpers (5) durch eine Drehbewegung relativ zum Grundkörper (1) hervorrufbar ist.

18. Anschlussvorrichtung nach Anspruch 17, **dadurch gekennzeichnet, dass** der Schraubeingriff (25) so ausgelegt ist, dass weniger als eine Umdrehung des Betätigungskörpers (5) erforderlich ist, um zwischen einer ein Einstecken oder Entnehmen einer Druckmittelleitung (7) gestattenden Lösestellung und einer eine eingesteckte Druckmittelleitung (7) festhaltenden Spannstellung zu variieren.

19. Abschlussvorrichtung nach Anspruch 17 oder 18, **dadurch gekennzeichnet, dass** der Schraubeingriff (25) als Bajonettverbindung, als Steilgewindeverbindung oder als mehrgängige Gewindeverbindung ausgeführt ist.

20. Anschlussvorrichtung nach einem der Ansprüche 1 bis 19, **dadurch gekennzeichnet, dass** der Betätigungskörper (5) axial verschiebbar am Grundkörper (1) gelagert ist, wobei die axiale Verlagerung des Betätigungskörpers (5) durch eine axiale Verschiebebewegung relativ zum Grundkörper (1) hervorrufbar ist.

21. Anschlussvorrichtung für Druckmittelleitungen, nach einem der Ansprüche 1 bis 20, **dadurch gekennzeichnet, dass** der Betätigungskörper axial zwischen einer die Spannzange (3) nicht oder nur wenig radial beaufschlagenden Lösestellung und einer die Spannzange (3) stärker radial beaufschlagenden Spannstellung verschiebbar ist, wobei er in der Spannstellung durch eine Art Rastverbindung axial fixiert ist.

22. Anschlussvorrichtung nach Anspruch 21, **dadurch gekennzeichnet, dass** die Rastverbindung durch einen Rasteingriff zwischen dem Betätigungskörper (5) und der Spannzange (3) realisiert ist.

23. Anschlussvorrichtung nach Anspruch 22, **dadurch gekennzeichnet, dass** der Rasteingriff dadurch hervorgerufen wird, dass sich die zweite Beaufschlagungsfläche (27) im Bereich des Halteabschnittes (58) der ersten Beaufschlagungsfläche befindet.

24. Anschlussvorrichtung nach einem der Ansprüche 1 bis 23, **dadurch gekennzeichnet, dass** axial zwischen der Spannzange (3) und einer ringförmigen Anschlagschulter (21) des Grundkörpers (1) ein Dichtungsring (22) angeordnet ist.

25. Anschlussvorrichtung nach einem der Ansprüche 1 bis 24, **gekennzeichnet durch** eine an einer der Einsteckseite (6) axial entgegengesetzten Befestigungsseite (11) des Grundkörpers (1) vorgesehene, zweckmäßigerweise ein Gewinde (13) aufweisende, schaftartige Befestigungspartie (12).

26. Anschlussvorrichtung nach Anspruch 25, **gekennzeichnet durch** einen unverlierbar konzentrisch auf der schaftartigen Befestigungspartie (12) sitzenden Dichtungsring (15).

27. Anschlussvorrichtung nach einem der Ansprüche 1 bis 26, **dadurch gekennzeichnet, dass** der Grundkörper (1) von einem Bestandteil eines Gehäuses eines fluidtechnischen Bauteils, zum Beispiel eines Ventils, gebildet ist.

28. Anschlussvorrichtung nach einem der Ansprüche 1 bis 27, **dadurch gekennzeichnet, dass** die Spannzange (3) aus Kunststoffmaterial und/oder aus Metall besteht.

## Claims

1. Connection device for pressure medium lines
- with a base body (1) having a flow passage (2),
- with an insertion side (6) provided for the insertion of a pressure medium line (7),
- with a sleeve-like collet (3), held to the base body (1) coaxial to an end section (4) of the flow passage (2) and divided by longitudinal slots (28, 28') into clamping arms (32) distributed over the periphery and radially movable, said collet being provided with inwards projecting gripping teeth (33, 33') and defining with its outer periphery a first pressure-loading face (26) tapering conically over at least part of its length towards the insertion side (6),
- and with a sleeve-like actuating body (5) coaxially enclosing the collet (3) over at least part of its length and engaging with the base body (1) while being axially movable relative to the latter, and defining at the inner periphery a second pressure-loading face (27) facing the first pressure-loading face (26) and tapering conically over at least part of its length towards the insertion side (6), wherein the two pressure-loading faces (26,27) are able to interact in such a way that the gripping teeth (33,33') of the collet (3) are pressed against the outer periphery (46) of a pressure medium line (7) inserted at the insertion side (6) of the connection device,
**characterised in that** the gripping teeth (33, 33') are restricted locally to two clamping zones (34, 34') spaced axially apart, assigned to the two axial end sections (23, 24) of the collet (3) and separated from one another by an untoothed intermediate zone (35), wherein the end sections of the clamping arms (32) provided with gripping teeth (33, 33') in the one clamping zone (34) are radially movable at least substantially independently of those in the other clamping zone (34') and the second pressure-loading face (27) acts in conjunction with the collet (3) in the area lying axially between the two clamping zones (34, 34').

2. Connection device according to claim 1, **characterised in that** the pressure-loading faces (26, 27) on both sides are arranged and designed in such a way that the clamping forces exerted on the inserted pressure medium line (7) in the area of the two clamping zones (34, 34') are roughly equal.

3. Connection device according to claim 1 or 2, **characterised in that** the second pressure-loading face (27) provided on the actuating body (5) is shorter than the first pressure-loading face provided on the collet (3).

4. Connection device according to any of claims 1 to 3, **characterised in that** the collet (3) has two groups of longitudinal slots (28, 28') distributed over the periphery, each extending over only part of the length of the collet (3) and open towards opposite end faces of the collet (3).

5. Connection device according to claim 4, **characterised in that** the longitudinal slots (28,28') of the two groups axially overlap.

6. Connection device according to claim 5, **characterised in that** the second pressure-loading face (27) works in conjunction with the collet (3) in the area in which the two groups of slots overlap.

7. Connection device according to any of claims 4 to 6, **characterised by** an alternating arrangement of longitudinal slots (28, 28') of the first and second group of slots in the circumferential direction of the collet (3).

8. Connection device according to any of claims 1 to 7, **characterised in that** the collet (3) is in the form of a bent stamped part.

9. Connection device according to any of claims 1 to 8, **characterised in that** an end area (37) of a clamping arm (32) provided with one or more gripping teeth (33, 33') is axially adjacent to the closed axial end (36) of each longitudinal slot (28, 28').

10. Connection device according to any of claims 1 to 9, **characterised in that** the collet (3) is held in the end section (4) of the flow passage (2) at least by its inner axial end area (23), while engaging with minimal axial freedom of movement with first retaining lugs (42) extending radially outwards from the assigned end areas of the clamping arms (32) into a retaining recess (43) of the base body (1) which is open radially inwards.

11. Connection device according to any of claims 1 to 10 **characterised in that** the collet (3) has, on its outer axial end area (24) facing the insertion side (6), second retaining lugs (44) which extend radially outwards from the assigned end sections of the clamping arms (32) and are engaged from behind on the axial inside by an annular stop collar (45) provided on the inner periphery of the actuating body (5).

12. Connection device according to any of claims 1 to 11, **characterised in that** the end areas of the clamping arms (32) have several axially consecutive gripping teeth (33, 33') in at least one of the two clamping zones (34, 34').

13. Connection device according to any of claims I to 12, **characterised in that** the first pressure-loading face (26) tapers towards the insertion side (6) over its entire length.

14. Connection device according to any of claims I to 12, **characterised in that** the first pressure-loading face (26) has an activation section (56) which tapers conically towards the insertion side (6) and is adjoined on its axial end area facing away from the insertion side (6) by a retaining section (58) which is radially recessed relative to the aforementioned axial end area, while the second pressure-loading face (27) provided on the actuating body is axially shorter than the first pressure-loading face (26) and, during axial movement of the actuating body (5), moves between the two aforementioned sections of the first pressure-loading face.

15. Connection device according to claim 14, **characterised in that** the retaining section (58) tapers, in particular conically, from the activation section (56) to its axial end area which faces away from the insertion side (6).

16. Connection device according to any of claims 1 to 15, **characterised in that** the second pressure-loading face (27) is located on an annular projection (54) which extends radially inwards relative to areas of the actuating body (5) which are axially adjacent on both sides.

17. Connection device according to any of claims 1 to 16, **characterised in that** the actuating body (5) is in screwed engagement with the base body (1), while the axial movement of the actuating body (5) is produced by a rotary movement relative to the base body (1).

18. Connection device according to claim 17, **characterised in that** the screwed engagement (25) is so designed that less than one rotation of the actuating body (5) is required to vary between a release position permitting insertion or removal of a pressure medium line (7), and a clamping position holding an inserted pressure medium line (7) in place.

19. Connection device according to claim 17 or 18, **characterised in that** the screwed engagement (25) is in the form of a bayonet connection, a coarse threaded connection or a multiple thread connection.

20. Connection device according to any of claims 1 to 19, **characterised in that** the actuating body (5) is mounted so as to be capable of sliding axially on the base body (1), while the axial movement of the actuating body (5) is produced by an axial sliding movement relative to the base body (1).

21. Connection device for pressure medium lines according to any of claims 1 to 20, **characterised in that** the actuating body is able to slide axially between a release position not acting on the collet (3) or acting on it only a little, and a clamping position acting radially more strongly on the collet (3), wherein in the clamping position it is located axially by a type of snap-in connection.

22. Connection device according to claim 21, **characterised in that** the snap-in connection is realised by a snap-in engagement between the actuating body (5) and the collet (3).

23. Connection device according to claim 22, **characterised in that** the snap-in engagement is produced when the second pressure-loading face (27) is located in the area of the retaining section (58) of the first pressure-loading face.

24. Connection device according to any of claims 1 to 23, **characterised in that** a seal ring (22) is fitted axially between the collet (3) and an annular stop collar (21) of the base body (1).

25. Connection device according to any of claims 1 to 24, **characterised by** a shank-like fastening section (12), expediently with a thread (13), provided on a fastening side (11) of the base body (1) axially opposite the insertion side (6).

26. Connection device according to claim 25, **characterised by** a captive seal ring (15) resting concentrically on the shank-like fastening section (12).

27. Connection device according to any of claims 1 to 26, **characterised in that** the base body (1) is formed by a part of a housing of a fluidic component, for example a valve.

28. Connection device according to any of claims 1 to 27, **characterised in that** the collet (3) is made of plastic material and/or metal.

## Revendications

1. Dispositif de raccord pour des conduites de fluide sous pression, comprenant
- un corps de base (1) muni d'un canal d'écoulement (2),
- un côté de branchement (6) prévu pour l'engagement d'une conduite de fluide sous pression (7),
- une pince de serrage (3) de type manchon, laquelle est maintenue coaxialement contre le corps de base (1) au niveau d'une extrémité (4) du canal d'écoulement (2), laquelle est partagée en bras de serrage (32) mobiles radialement par l'intermédiaire de fentes longitudinales (28, 28') réparties sur le pourtour, laquelle est munie de dents de prise (33, 33') en saillie vers l'intérieur et laquelle comporte un pourtour extérieur qui définit une première surface de sollicitation (26) qui, au moins sur une partie de sa longueur, se rétrécit en forme de cône en direction du côté de branchement (6),
- et un corps d'actionnement (5) de type manchon, lequel entoure coaxialement la pince de serrage (3) sur au moins une partie de sa longueur, lequel est en prise avec le corps de base (1) et est apte à être déplacé axialement par rapport à celui-ci et lequel définit par son pourtour intérieur une deuxième surface de sollicitation (27) qui est orientée vers la première surface de sollicitation (26) et qui, au moins sur une partie de sa longueur, se rétrécit en forme de cône en direction du côté de branchement (6), les deux surfaces de sollicitation (26, 27) coopérant l'une avec l'autre de telle sorte que les dents de prise (33, 33') de la pince de serrage (3) sont pressées contre le pourtour extérieur (46) d'une conduite de milieu sous pression (7) engagée dans le côté de branchement (6) du dispositif de raccord,
**caractérisé en ce que** les dents de prise (33, 33') sont limitées localement à deux zones de serrage (34, 34') écartées axialement l'une de l'autre, lesquelles sont associées aux deux extrémités axiales (23, 24) de la pince de serrage (3) et sont séparées l'une de l'autre par une zone intermédiaire (35) non dentée, les extrémités de la pince de serrage (32) munies des dents de prise (33, 33') dans l'une des zones de serrage (34) étant mobiles radialement au moins sensiblement indépendamment de celles dans l'autre zone de serrage (34') et la deuxième surface de sollicitation (27) coopérant avec la pince de serrage (3) dans la zone située axialement entre les deux zones de serrage (34, 34').

2. Dispositif de raccord selon la revendication 1, **caractérisé en ce que** les surfaces de sollicitation (26, 27) des deux côtés sont disposées et sont conçues de telle sorte que les forces de serrage exercées dans la partie des deux zones de serrage (34, 34') sur la conduite de fluide sous pression (7) engagée sont pratiquement identiques.

3. Dispositif de raccord selon la revendication 1 ou 2, **caractérisé en ce que** la deuxième surface de sollicitation (27) prévue au niveau du corps d'actionnement (5) est plus courte que la première surface de sollicitation prévue au niveau de la pince de serrage (3).

4. Dispositif de raccord selon l'une quelconque des revendications 1 à 3, **caractérisé en ce que** la pince de serrage (3) comporte deux groupes de fentes longitudinales (28, 28') réparties sur le pourtour, qui ne s'étendent chacune que sur une partie de la longueur de la pince de serrage (3) et sont ouvertes vers le côté frontal opposé de la pince de serrage (3).

5. Dispositif de raccord selon la revendication 4, **caractérisé en ce que** les fentes longitudinales (28, 28') des deux groupes se chevauchent axialement.

6. Dispositif de raccord selon la revendication 5, **caractérisé en ce que** la deuxième surface de sollicitation (27) coopère avec la pince de serrage (3) dans la zone de chevauchement des deux groupes de fentes.

7. Dispositif de raccord selon l'une quelconque des revendications 4 à 6, **caractérisé par** un agencement alterné des fentes longitudinales (28, 28') du premier et du deuxième groupe de fentes dans le sens périphérique de la pince de serrage (3).

8. Dispositif de raccord selon l'une quelconque des revendications 1 à 7, **caractérisé en ce que** la pince de serrage (3) est conçue sous forme de pièce découpée et flexible.

9. Dispositif de raccord selon l'une quelconque des revendications 1 à 8, **caractérisé en ce qu'**une extrémité (37) d'un bras de serrage (32), munie d'au moins une dent de prise (33, 33'), est contiguë axialement à l'extrémité axiale (36) fermée de chaque fente longitudinale (28, 28').

10. Dispositif de raccord selon l'une quelconque des revendications 1 à 9, **caractérisé en ce que** la pince de serrage (3) est logée, au moins avec son extrémité axiale (23) intérieure, dans la partie d'extrémité (4) du canal d'écoulement (2), ladite pince de serrage, au moyen de premières saillies de retenue (42) qui s'avancent radialement vers l'extérieur sur les extrémités associées des bras de serrage (32), entrant en prise avec un faible jeu axial dans une gorge de retenue (43), réalisée dans le corps de base (1) et ouverte radialement vers l'intérieur.

11. Dispositif de raccord selon l'une quelconque des revendications 1 à 10, **caractérisé en ce que** la pince de serrage (3), au niveau de son extrémité axiale extérieure (24) orientée vers le côté de branchement (6), comporte des deuxièmes saillies de retenue (42) qui s'avancent radialement vers l'extérieur sur les extrémités associées des bras de serrage (32) et qui sont retenues à l'arrière, sur le côté intérieur axial, par un épaulement de butée (45) circulaire prévu sur le pourtour intérieur du corps d'actionnement (5).

12. Dispositif de raccord selon l'une quelconque des revendications 1 à 11, **caractérisé en ce que** les extrémités des bras de serrage (32), dans au moins l'une des deux zones de serrage (34, 34'), comportent plusieurs dents de prise (33, 33') disposées successivement dans le sens axial.

13. Dispositif de raccord selon l'une quelconque des revendications 1 à 12, **caractérisé en ce que** la première surface de sollicitation (26), sur toute sa longueur, s'étend en se rétrécissant en direction du côté de branchement (6).

14. Dispositif de raccord selon l'une quelconque des revendications 1 à 12, **caractérisé en ce que** la première surface de sollicitation (26) est formée par une partie d'activation (56), qui se rétrécit en cône en direction du côté de branchement (6) et dont l'extrémité axiale, opposée au côté de branchement (6), se prolonge par une partie de retenue (58), décalée radialement vers l'arrière par rapport à ladite partie d'activation, la deuxième surface de sollicitation (27) prévue au niveau du corps d'actionnement étant axialement plus courte que la première surface de sollicitation (26) et changeant de position pendant le déplacement axial du corps d'actionnement (5) entre les deux parties prévues sur la première surface de sollicitation.

15. Dispositif de raccord selon la revendication 14, **caractérisé en ce que** la partie de retenue (58) se rétrécit, en particulier en forme de cône, à partir de la partie d'activation (56) vers son extrémité axiale opposée au côté de branchement (6).

16. Dispositif de raccord selon l'une quelconque des revendications 1 à 15, **caractérisé en ce que** la deuxième surface de sollicitation (27) est disposée sur une saillie annulaire (54) s'avançant radialement vers l'intérieur par rapport à des zones voisines du corps d'actionnement (5) situées axialement de part et d'autre de ladite saillie annulaire.

17. Dispositif de raccord selon l'une quelconque des revendications 1 à 16, **caractérisé en ce que** le corps d'actionnement (5) entre en prise par vissage avec le corps de base (1), le déplacement axial du corps d'actionnement (5) étant dû à un mouvement de rotation par rapport au corps de base (1).

18. Dispositif de raccord selon la revendication 17, **caractérisé en ce que** l'assemblage vissé (25) est conçu de telle sorte que moins d'une rotation du corps d'actionnement (5) est nécessaire pour passer d'une position de desserrage, permettant de brancher ou débrancher une conduite de fluide sous pression (7), vers une position de serrage assurant le blocage d'une conduite de fluide sous pression (7) engagée.

19. Dispositif de raccord selon la revendication 17 ou 18, **caractérisé en ce que** l'assemblage vissé (25) est conçu sous forme d'assemblage à baïonnette, d'assemblage fileté à pas rapide ou d'un assemblage fileté à plusieurs pas.

20. Dispositif de raccord selon l'une quelconque des revendications 1 à 19, **caractérisé en ce que** le corps d'actionnement (5) est assemblé de manière mobile axialement avec le corps de base (1), le déplacement axial du corps d'actionnement (5) étant dû à coulissement axial par rapport au corps de base (1).

21. Dispositif de raccord pour des conduites de fluide sous pression selon l'une quelconque des revendications 1 à 20, **caractérisé en ce que** le corps d'actionnement peut coulisser axialement entre une position de desserrage, dans laquelle la pince de serrage (3) n'est pas ou est seulement faiblement sollicitée dans le sens radial, et une position de serrage, dans laquelle la pince de serrage (3) est sollicitée plus fortement dans le sens radial, ledit corps d'actionnement étant bloqué axialement dans la position de serrage par une sorte d'assemblage par encliquetage.

22. Dispositif de raccord selon la revendication 21, **caractérisé en ce que** l'assemblage par encliquetage est réalisé par un enclenchement entre le corps d'actionnement (5) et la pince de serrage (3).

23. Dispositif de raccord selon la revendication 22, **caractérisé en ce que** l'enclenchement est dû au fait que la deuxième surface de sollicitation (27) se situe dans la zone de la partie de retenue (58) de la première surface de sollicitation.

24. Dispositif de raccord selon l'une quelconque des revendications 1 à 23, **caractérisé en ce qu'**une bague d'étanchéité (22) est posée axialement entre la pince de serrage (3) et un épaulement de butée (21) circulaire du corps de base (1).

25. Dispositif de raccord selon l'une quelconque des revendications 1 à 24, **caractérisé par** une partie de fixation (12) de type tige, qui est prévue sur un côté de fixation (11) du corps de base (1) et qui est opposée axialement au côté de branchement (6) et est munie de manière judicieuse d'un filetage (13).

26. Dispositif de raccord selon la revendication 25, **caractérisé par** une bague d'étanchéité (15) imperdable, posée concentriquement sur la partie de fixation (12) de type tige.

27. Dispositif de raccord selon l'une quelconque des revendications 1 à 26, **caractérisé en ce que** le corps de base (1) est formé par une partie intégrante d'un boîtier d'un composant technique du système fluidique, tel qu'une vanne.

28. Dispositif de raccord selon l'une quelconque des revendications 1 à 27, **caractérisé en ce que** la pince de serrage (3) est réalisée dans une matière plastique et/ou en métal.
